# EUROPEAN PATENT APPLICATION

(11) **EP 0 806 647 A2**
(43) Date of publication of application: **12.11.1997**
(21) Application number: 97302979.6
(22) Date of filing: 01.05.1997
(51) Int. Cl.: G01N 1/00, B01L 7/00

(54) **Method and apparatus for dispensing and distributing liquid sample**

(30) Priority: 06.05.1996 US 16942; 12.11.1996 US 747046
(71) Applicant: HELENA LABORATORIES CORPORATION, Beaumont Texas 77704-0752 (US)
(72) Inventor: Golias, Tipton L., Beaumont, Texas 77704-0752 (US); Mayes, Ronald A., Baumont, Texas 77704-0752 (US)
(74) Representative: W.P. Thompson & Co.

(57) **Abstract**

The present specification describes a method and apparatus to dispense and spread a liquid from a container (200) onto a surface. A paddle (400) is attached to a cannula (350) which is inserted into the stopper (220) of a container (200), such as a test tube. The cannula (350) flexes the stopper (220) to dispense the sample (390) through the cannula (350). After dispensing the sample (390), the paddle (400) smears, crushes, or distributes the dispensed sample (390). This increases the safety, speed and efficiency of the smear procedure, and reduces the risk that the sample (390) will be contaminated. Further, the method and apparatus include the alternate use of a temperature differential, rather than flexing the stopper (220), to safely dispense hazardous biological and chemical samples from the container (200).

## Description

The present invention relates to an apparatus and method for use in dispensing and distributing a liquid sample.

The present method and apparatus have particular application to medical and laboratory diagnostics. It is often necessary to dispense liquids from conventional containers, such as test tubes, onto a surface, and then distribute the dispensed liquid on the surface. Because the distributing operation can be dangerous if performed with substances that are hazardous, toxic, or infectious, the invention is further related to the field of laboratory and worker safety. Another reason to isolate the sample from the technician is to prevent contamination of the sample. Furthermore, certain tests require the technician to spread a liquid sample on a glass slide. For example, a proper spread or smearing or distribution of a sample is an important step that is required to accurately perform many hematologic diagnoses.

According to the present invention there is provided an apparatus for dispensing a liquid sample from a container onto a surface and for distributing the sample on the surface, the container being closed by a stopper at one end, the apparatus comprising:
a cannula for penetrating through the stopper onto the interior of the container to dispense the liquid through the cannula on to a surface; and
a first member operatively coupled to the container for distributing the dispensed sample on the surface.

According to a further feature of the present invention there is provided a method of depositing a liquid sample from a container onto a surface, the container closed at one end by a stopper, and for distributing the sample on the surface, the method comprising the steps of:
positioning a first member in operative contact with the container;
piercing the stopper with a cannula;
placing the container in proximity to the surface;
creating a pressure differential between the interior and the exterior of the container for dispensing the sample through the cannula onto the surface; and
distributing the sample on the surface by contacting the sample with the first member.

The present invention thus provides a unique dispensing method and apparatus designed to allow laboratory technicians to easily dispense and spread samples onto a surface. The dispensing apparatus includes a cannula and a paddle that is used to spread the sample immediately following the dispensing of the sample. Using the present invention, a technician may dispense and smear a hazardous blood sample onto a glass slide.

It is an aspect of the invention to provide a method and apparatus for dispensing and distributing samples onto a surface, without exposing the technician to hazardous samples.

It is another aspect of the invention to provide a method and apparatus for distributing samples onto a surface without contaminating the samples.

The foregoing aspects and advantages of the present invention, together with other advantages which may be attained by its use, will become more apparent upon reading the following detailed description of the invention, which is given, by way of example, with reference to the accompanying drawings wherein like reference numerals identify corresponding components, and in which:-
Fig. 1 is a three dimensional view of one embodiment of a dispensing apparatus constructed according to the present invention;
Fig. 2A is a cross-sectional view of the dispensing apparatus of Fig. 1;
Fig. 2B is an underside view along lines A-A of Fig. 2A of the dispensing apparatus;
Fig. 3 is a cross-sectional view of the dispensing apparatus of Figs. 1 and 2 in an in-use position;
Fig. 4 is a cross-sectional view of the dispensing apparatus of Figs. 1 and 2, where a paddle of the dispensing apparatus is used to spread the sample of Fig. 3;
Fig. 5 is a diagrammatic illustration of a heating apparatus for use with the present invention;
Fig. 6 is a diagrammatic, partially cross-sectional illustration of the construction of the heating apparatus of Fig. 5;
Figures 7, 8, 9 and 10 are cross-sectional illustrations of a method of using the heating apparatus of Figures 5 and 6 to safely dispense a hazardous substance from a container; and
Figure 11 is a diagrammatic illustration of the method and apparatus of an alternative embodiment of safely dispensing and distributing a hazardous substance from a container when utilising the dispensing apparatus of the present invention.

The present invention provides a dispensing apparatus that may be used with storage devices such as a container or test tube. As used herein the term "distributing" is intended to encompass all devices and mechanisms of any kind which can be used to apply a sample, of any form, onto a substrate. The term "distributing" is further intended to encompass all methods of any kind including, by way of example and not by way of limitation, spreading, crushing, and smearing, regardless of any discontinuity and/or lack of homogeneity or uniformity in the result.

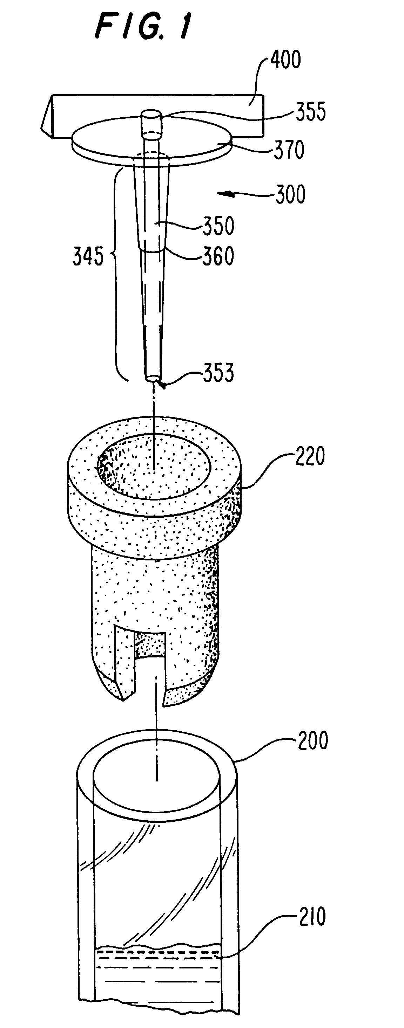

Referring to Figure 1 the dispensing apparatus 300 is inserted through a conventional rubber test tube stopper 220, either prior to insertion of the stopper into test tube 200, or after the stopper has been inserted into a test tube which contains a liquid 210. The liquid 210 may be a biological or chemical substance, and may be hazardous, toxic, or infectious.

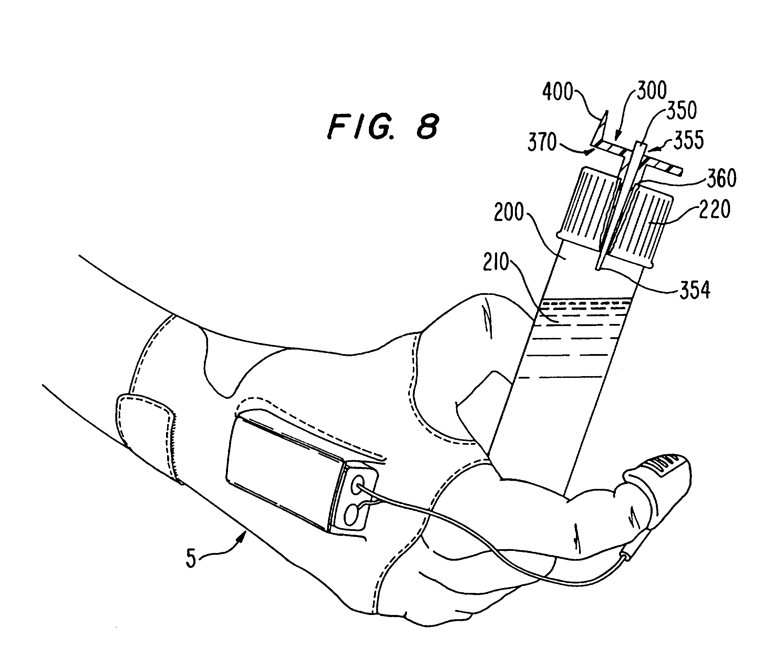

With continued reference to Figure 1, the dispensing apparatus 300 is formed as a cannula, containing channel 350 and a lip or shoulder 360. The channel 350 has an entrance portion or tip 353 and an exit portion 355. The shoulder 360 is preferably perpendicular to the axis of the channel 350. A ledge 370 provides a support for holding the dispensing apparatus so that the entrance portion 353 may be inserted into the stopper 220. The exit portion 355 of the channel 350 preferably extends past the ledge 370. The shoulder 360 is optional when the test tube is to be heated to dispense a sample, as discussed below with reference to Figure 8.

The cannula entrance portion 353 is preferably constructed as a pointed tip which is sufficiently sharp to pierce a typical rubber stopper. The tip 353 functions to break a seal on a sealed container to allow pressure to equalize between the inside of the container and the outside of the container. Alternatively, an unsealed container with a preformed opening in the stopper may be used and the dispensing apparatus 300 is positioned by insertion through the preformed opening. As used herein, the term "pierce" is intended to cover all methods of inserting the dispensing apparatus 300, including (a) where the tip 353 penetrates through the stopper 220 and (b) where the stopper has a preformed hole.

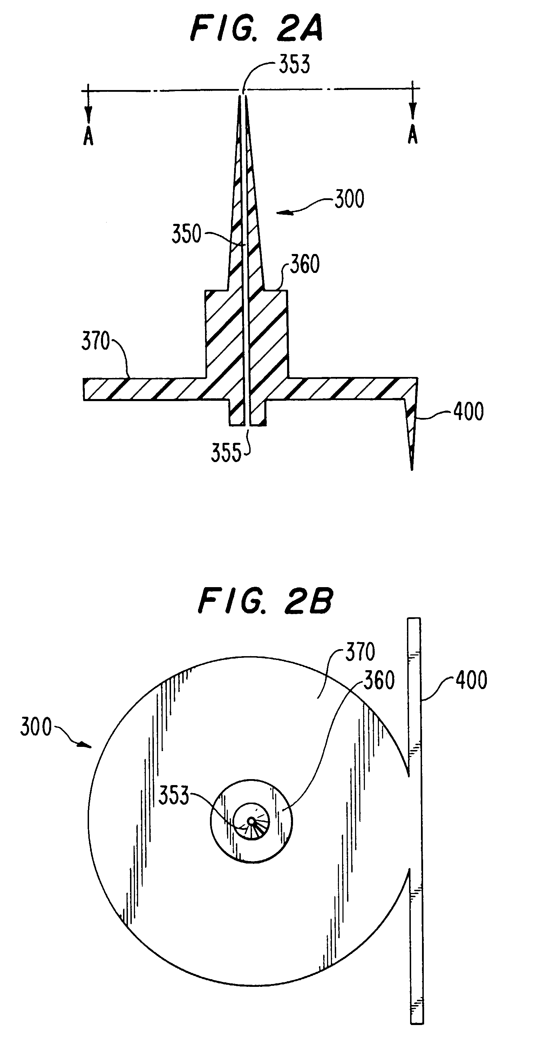

A member 400 such as a paddle is preferably included as part of the dispensing apparatus 300 for use in distributing a dispensed sample. The paddle 400 is preferably perpendicular to the ledge 370 and parallel to the channel 350 and preferably extends past the cannula exit 355. The channel 350, shoulder 360, ledge 370, and paddle 400 are formed integrally with each other (see Fig. 2A) though alternatively they may be discrete components attached together by any suitable method such as by glue, cement or a snap-fit. The apparatus is preferably constructed of molded plastic or may be formed of a single piece of glass or pyrex, by known techniques. Although the exterior 345 of the channel 350 is shown tapered from the ledge 370 to the entrance 353, tapering is not required.

Figure 2A is a cross-sectional view of the dispenser 300 of the present invention including the paddle 400, ledge 370, shoulder 360 and channel 350. Figure 2B is a bottom view of the dispensing apparatus along lines A-A of Figure 2A. The cannula entrance 353 may be offset or tapered from the end of the channel 350. Figure 2B includes the paddle 400 aligned tangentially to the ledge 370, although any position which allows distributing of the sample is suitable. The shape of the paddle 400 may be a rectangular, longitudinal projection which tapers to a point or tip. The paddle 400 may be any suitable shape useful for distributing or crushing a dispensed sample.

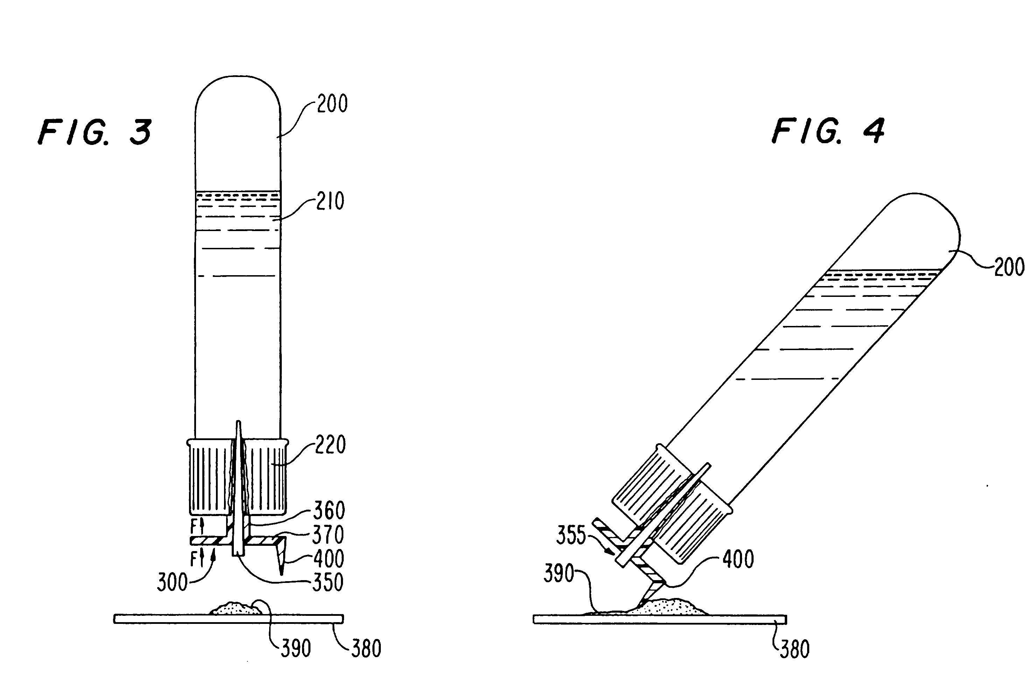

Referring next to Figure 3, a test tube 200 containing a sample liquid 210 is sealed by a flexible rubber stopper 220. Although a test tube 200 is illustrated, any container may be used. After insertion of the cannula into the stopper, the container is then inverted and positioned over a surface, such as a glass slide 380, on which it is desired to dispense a sample. Next, an upward force F is applied to the ledge 370, causing the shoulder 360 to flex the rubber stopper 220. Flexing or compressing the rubber stopper causes the pressure inside the container 200 to increase which forces liquid 210 through channel 350, to form a deposit of liquid 390 on the glass slide 380. Rather than apply a force F directly to the ledge 370, the force could be applied to the paddle 400. This may be performed either by pushing the paddle upwards, or by pushing the test tube downwards so that the paddle is forced against the surface of the glass slide 380.

With reference to Figure 4, the dispensing apparatus 400 is next used to spread the sample 390. This may be accomplished by rotating or pivoting the container 200 and moving the paddle 400 in contact with the sample 390. By pivoting the container and applying a force on the container to distribute the sample 390 with the paddle 400, it is unnecessary to set aside the container 200 and use a second glass slide to contact with the sample on slide 380 as was previously done. The process of distributing and smearing is therefore greatly simplified. Furthermore, the safety of the "smearing" step is increased. The technician may hold the container or test tube 200 at the end opposite the paddle and control the paddle and the distribution of the sample 390, with the hands of the technician being remote from any hazardous or toxic sample which may be dispensed on the slide 380. The same apparatus 300 and paddle 400 may be used for multiple samples on multiple slides, e.g., for multiple tests. Therefore, it is evident that the present apparatus and method increases the safety of dispensing samples of hazardous liquids from containers and increases the speed and efficiency at which samples can be provided and spread, while reducing the risk of contamination of the sample.

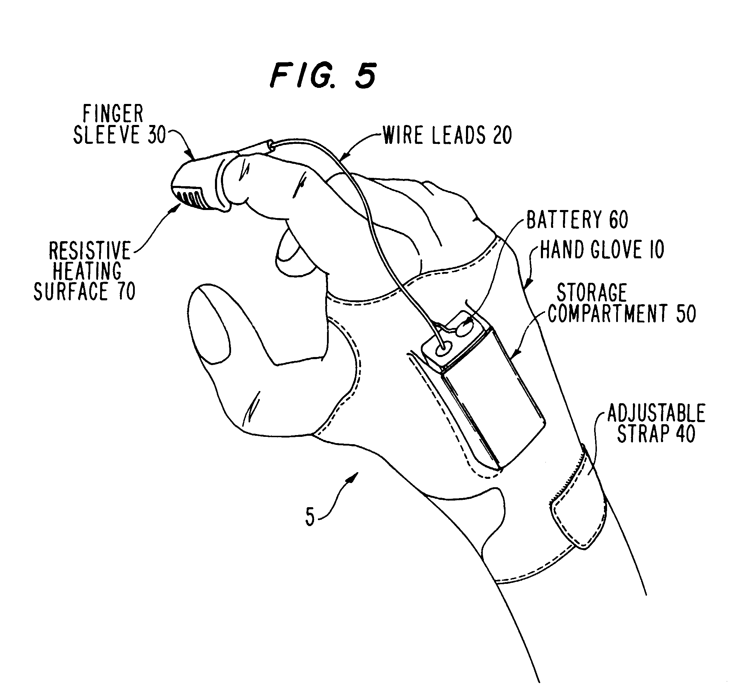

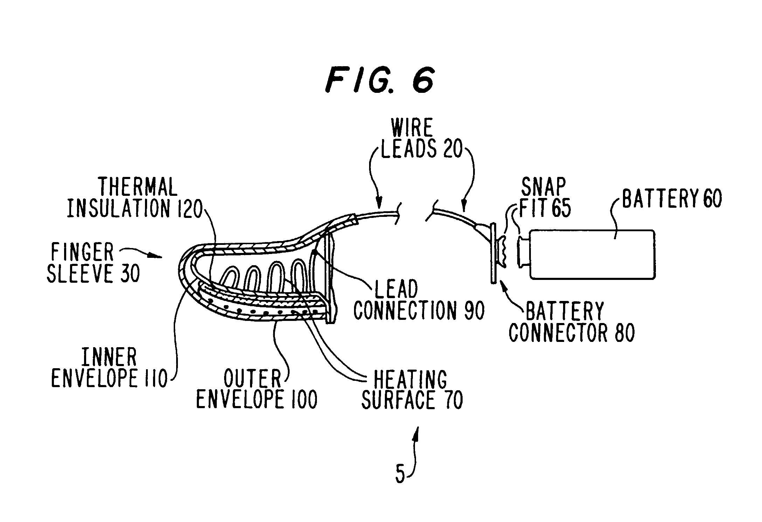

Figures 5, 6, 7, 8, 9, 10 and 11 relate to an optional apparatus and method using heat to dispense a sample from a test tube. With reference to Figure 5, a heating apparatus 5 of the present invention includes a glove 10, flexible, insulated wire leads 20 and finger sleeve 30. The glove 10 covers the palm and back of the hand and includes an adjustable strap 40 so that the glove may be snugly secured over the hand. The strap may be of the hook and loop type or other conventional design. The glove 10 also contains a storage compartment 50 to hold an energy source which preferably will be a battery 60. The finger sleeve 30 includes a resistive heating surface 70 which generates heat in response to energy from the battery 60. Preferably, the resistive heating surface 70 is constructed of Kapton®, or a similar material which provides suitable heat in response to a low (9 volt) voltage from the battery 60. Referring next to Figure 6, the battery 60 is connected through a snap-fit connector 65 to wire leads 20. The wire leads 20 connect through lead connection 90 to heating surface 70 at the finger sleeve 30. The lead connection 90 is permanent, as by crimping or soldering, or alternativley may be removable, as with a mating plug. In the finger sleeve 30, an outer latex envelope 100 and inner latex envelope 110 surround the heating surface 70 and thermal insulation 120 is placed between the inner envelope 110 and the heating surface 70. The thermal insulation 120 is preferably foam or other conventional insulation. The finger of the laboratory technician is insulated from any heat generated by the heating element, by thermal insulation 120.

In use, current is drawn from battery 60 through battery connector 80 and along wire leads 20 and the heating surface 70 increases in temperature. The heat from surface 70 radiates through the outer envelope 100 and the technician may heat samples by merely touching the outer envelope 100 to the container, or may place the outer envelope 100 in close proximity to the container. Although the glove 10 as illustrated does not cover the fingers of the laboratory technician, a full glove which covers one or more fingers may be desirable, especially if the temperature of the heating surface will be significantly elevated. The heating surface 70 is preferably contoured such that it conforms to surfaces which are perpendicular or parallel to the finger of the laboratory technician. Thus, minimal effort is needed to make contact between the heating surface 70 and a test tube 200 or container.

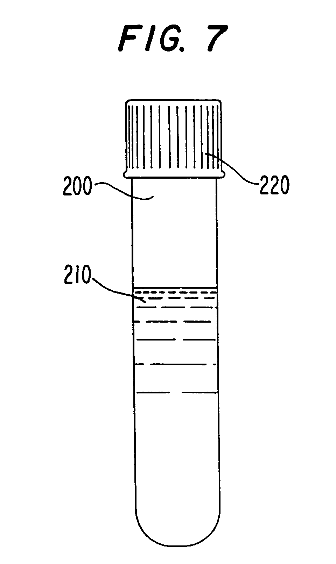

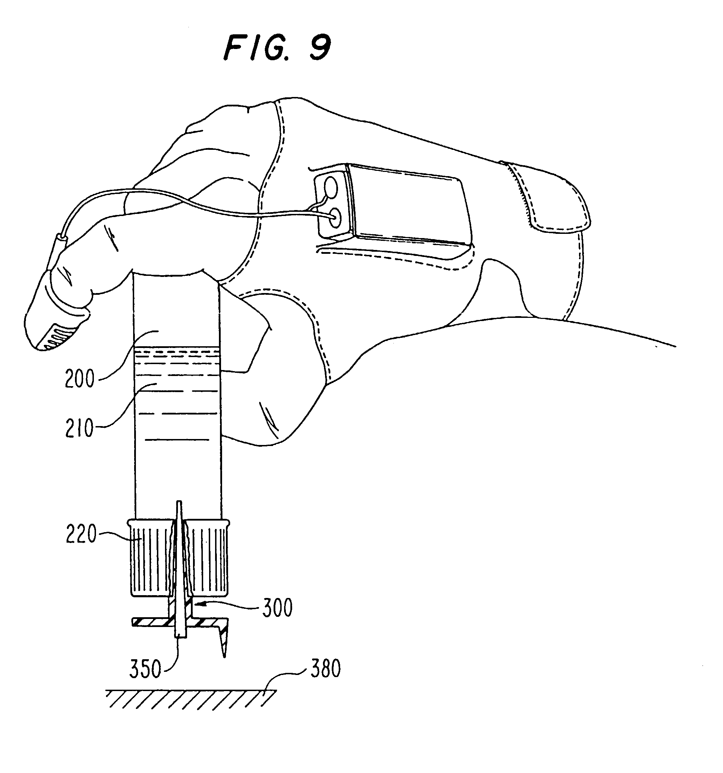

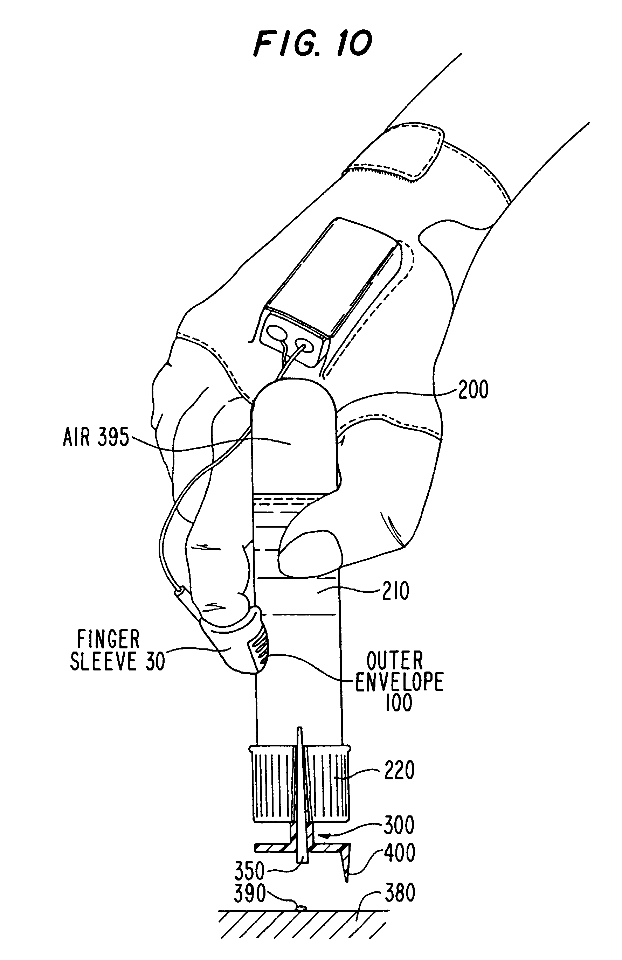

Figures 7, 8, 9 and 10 are examples of the use of the present method and apparatus to dispense a liquid sample from a container and spread the sample. First, with reference to Figure 7, a test tube 200 contains liquid 210. The liquid may be blood that is suspected to contain a disease or infection, such as the HIV virus. A rubber stopper 220 seals the test tube to prevent accidental spillage and to prevent contamination of the liquid 210. A technician wearing the heating apparatus 5 of the present invention grasps the test tube and the dispensing apparatus 300 is inserted through the rubber stopper 220, either prior to, or after, the technician grasps the test tube in the position shown in Figure 8. The end 353 is illustrated in an air space 354 in the test tube when the test tube is oriented in the upright position. The system may be automated, particularly if a large number of test tubes are being used to dispense many samples. Thus a machine can insert the apparatus 300 into the test tubes. In Figure 9 the test tube 200 is in the inverted orientation and because the test tube 200 is sealed, the pressure inside the test tube 200 is equal to the pressure outside the test tube 200. Therefore, no liquid is dispensed through channel 350. Then, in Figure 10, the outer envelope 100 of the finger sleeve 30 contacts the outer surface of the test tube 200. Heat from heating surface 70 is conducted onto the outer surface of the test tube 200. This heat is then transferred though the wall of the test tube and heats the liquid within the test tube 200. The heated liquid 210 expands, causing an increase of pressure on the inside of the test tube thus creating a pressure differential between the inside and outside of the test tube. This pressure differential forces liquid 210 to flow through channel 350 and liquid is deposited on surface 380 as a sample 390. Although Figure 10 shows heating the liquid 210, it may be preferable to heat air pocket 395 which is illustrated when the test tube is in the inverted orientation. The expansion of heated air creates a pressure differential and forces liquid through the channel to deposit a sample on surface 380. The deposited sample shown in Figure 10 may be then be easily spread using the techniques previously discussed with respect to Figure 4.

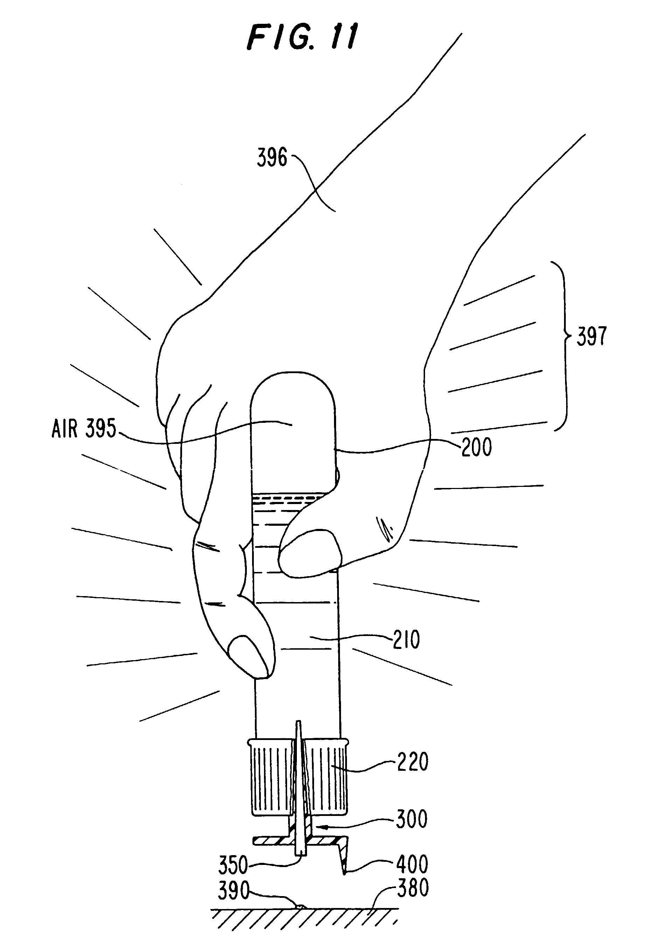

Referring next to Figure 11, the technician holds a test tube 200 with a dispensing apparatus 300, and uses body heat 397 from the hand of the technician to heat the contents of the test tube 200, particularly the air pocket 395 and liquid 210. The resulting pressure differential forces liquid through channel 350 to deposit a sample 390 onto surface 380. In each of the various embodiments it may be desirable to increase the temperature differential by initially cooling or refrigerating the test tube 200 and its contents 210.

## Claims

1. An apparatus for dispensing a liquid sample (390) from a container (200) onto a surface and for distributing the sample on the surface, the container (200) being closed by a stopper (220) at one end, the apparatus comprising:
a cannula (300,350,353,355) for penetrating through the stopper (220) onto the interior of the container (200) to dispense the liquid through the cannula (350) on to a surface; and
a first member (400) operatively coupled to the container (200) for distributing the dispensed sample (390) on the surface.

2. Apparatus as claimed in claim 1, in which the first member (400) is connected to the cannula (300,350,353,355).

3. Apparatus as claimed in claim 1 or 2, in which means (360, 70) are provided for use in producing a pressure differential between the interior and exterior of the container (200), by means of which the sample is dispensed through the cannula (350).

4. Apparatus as claimed in claim 1, 2 or 3, in which an exterior shoulder (300) on the cannula (350) can be used as said means for producing the pressure differential by flexing the stopper (220) inwardly of the container (200).

5. Apparatus as claimed in any of the preceding claims, in which heating means (70) are provided for use in heating the container (200) to produce a pressure differential.

6. A method of depositing a liquid sample (390) from a container (200) onto a surface, the container (200) closed at one end by a stopper (220), and for distributing the sample (390) on the surface, the method comprising the steps of:
positioning a first member (400) in operative contact with the container (200);
piercing the stopper (220) with a cannula (350,353);
placing the container (200) in proximity to the surface;
creating a pressure differential between the interior and the exterior of the container (200) for dispensing the sample (390) through the cannula (350,353) onto the surface; and
distributing the sample (390) on the surface by contacting the sample with the first member (400).

7. A method as claimed in claim 6, in which the step of creating a pressure differential includes applying heat to the exterior of the container (200).

8. A method as claimed in claim 7 or 8, further comprising the preliminary step of cooling the container (200) prior to the step of creating the pressure differential.

9. A method as claimed in claim 7 or 8, in which the step of applying heat comprises the step of transferring body heat to the exterior of the container (200).

10. A method as claimed in any one of claims 6 to 9, in which the step of creating a pressure differential includes flexing the stopper (220) inwardly of the container (200).
